## Europäisches Patentamt

## European Patent Office

## Office européen des brevets

(11) Veröffentlichungsnummer: **0 133 221**
**A1**

(12) # EUROPÄISCHE PATENTANMELDUNG

(21) Anmeldenummer: **84107979.1**

(22) Anmeldetag: **07.07.84**

(51) Int. Cl.⁴: **G 01 P 3/44**

(30) Priorität: **20.07.83 DE 3326038**

(43) Veröffentlichungstag der Anmeldung: **20.02.85**
Patentblatt **85/8**

(84) Benannte Vertragsstaaten: **DE FR GB IT**

(71) Anmelder: **International Standard Electric Corporation, 320 Park Avenue, New York New York 10022 (US)**

(84) Benannte Vertragsstaaten: **FR GB IT**

(71) Anmelder: **Standard Elektrik Lorenz Aktiengesellschaft, Hellmuth-Hirth-Strasse 42, D-7000 Stuttgart 40 (DE)**

(84) Benannte Vertragsstaaten: **DE**

(72) Erfinder: **Böhm, Manfred, Dr., Solitudestrasse 389, D-7000 Stuttgart 31 (DE)**

(74) Vertreter: **Schmidt, Werner, Dipl.-Phys. et al, c/o Standard Elektrik Lorenz AG Patent- und Lizenzwesen Kurze Strasse 8 Postfach 300 929, D-7000 Stuttgart 30 (DE)**

(54) **Einrichtung zur Messung der Drehgeschwindigkeit.**

(57) Zwei angenähert kreisförmige Schallwellenleiter (23, 24), die beide dieselbe Form haben, werden von jeweils einer akustischen Oberflächenwelle mit entgegengesetztem Richtungssinn durchlaufen. Aus der drehgeschwindigkeitsabhängigen Phasendifferenz zwischen den beiden Oberflächenwellen nach dem Durchlaufen der Schallwellenleiter wird die Drehgeschwindigkeit um eine Achse, die auf der von den Schallwellenleitern umschlossenen Fläche senkrecht steht, ermittelt.

Fig. 2

0133221

M.Böhm-39

Einrichtung zur Messung der Drehgeschwindigkeit

Die Erfindung betrifft eine Einrichtung zur Messung der
Drehgeschwindigkeit.

Es ist bekannt (z. B. aus der DE-OS 31 36 688), zur
Messung der Drehgeschwindigkeit Faserkreisel zu verwenden.
Bei diesen Meßeinrichtungen durchlaufen zwei Lichtstrahlen
einen spulenförmig angeordneten Lichtwellenleiter gegensinnig. Liegt eine Drehgeschwindigkeit vor, dann ist
zwischen den beiden Lichtstrahlen nach dem Durchlaufen des
Lichtwellenleiters eine drehgeschwindigkeitsabhängige
Phasendifferenz vorhanden. Aus dieser Phasendifferenz wird
die Drehgeschwindigkeit direkt (durch Auswertung der
Phasendifferenz) oder indirekt (durch Auswertung von Regelsignalen, die die Phasendifferenz kompensieren) ermittelt.

Mit solchen Faserkreiseln lassen sich gute Meßergebnisse
erzielen. Die Realisierung solcher Faserkreisel ist jedoch aufwendig. Weiterhin macht die gewünschte Meßgenauigkeit eine große von dem Lichtwellenleiter umschlossene
Fläche notwendig.

M.Böhm-39

Aufgabe der Erfindung ist es, eine einfache Einrichtung zur Messung der Drehgeschwindigkeit anzugeben, die dennoch gute Meßergebnisse ermöglicht.

Um eine vorgegebene Meßgenauigkeit zu erzielen, benötigt die neue Einrichtung wesentlich weniger Platz als der Faserkreisel. Soll ein vorgegebener Raum ausgenutzt werden, dann läßt sich mit der neuen Einrichtung eine höhere Meßgenauigkeit erzielen.

Die neue Einrichtung kann preiswert und dennoch robust realisiert werden, so daß sie für zahlreiche Anwendungsfälle geeignet ist; Beispiele hierfür sind die Flugkörper-Navigation, Stabilisierungsaufgaben allgemeinster Art; Messung der Drehgeschwindigkeit für Kraftfahrzeug-Antiblockiersysteme.

Die Erfindung wird anhand der Zeichnungen beispielsweise näher erläutert. Es zeigt:

Fig. 1      eine schematische Darstellung der neuen Meßein-richtung,

Fig. 2      Blockschaltbilder für Ausführungsbeispiele, und und 3

Fig. 4      mögliche Anordnungen für elektrisch/akustische Wandler.

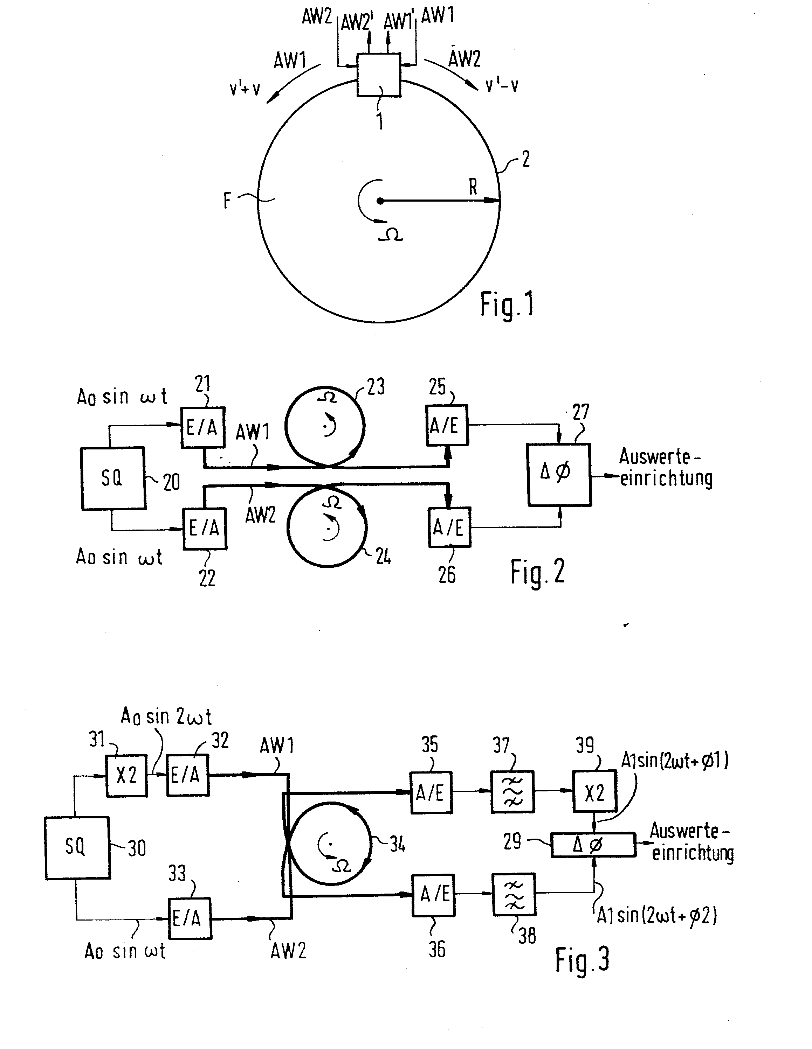

Anhand der Fig. 1 wird zunächst eine schematische Darstellung der neuen Einrichtung zur Messung der Drehgeschwindigkeit erläutert. Eine erste Schallwelle AW1 und

M.Böhm-39

zweite Schallwelle AW2 gelangen zu einer Koppeleinrichtung 1, die die beiden Schallwellen in einen Schallwellenleiter 2 einkoppeln. Der Schallwellenleiter umschließt eine geschlossene Fläche. Seine Form wird vorzugsweise kreisförmig oder rechteckförmig gewählt. Der Schallwellenleiter 2 wird von den beiden Schallwellen mit entgegengesetztem Drehsinn durchlaufen. Rotiert die Meßeinrichtung um eine Achse senkrecht auf der Fläche, die von dem Schallwellenleiter umschlossen wird, dann breiten sich die beiden Schallwellen in dem Schallwellenleiter mit den Geschwindigkeiten V'+V bzw. V'-V aus, wobei V' die Ausbreitungsgeschwindigkeit der Schallwelle, wenn keine Drehgeschwindigkeit vorliegt, ist. V ist die Umfangsgeschwindigkeit, die gleich R · $\Omega$ ist, mit R = Radius des von dem Schallwellenleiter gebildeten Kreises. Nach dem Durchlaufen des Schallwellenleiters haben die beiden Schallwellen eine Phasenverschiebung von $\Delta\phi$ zueinander, die von der Drehgeschwindigkeit $\Omega$ abhängt. Die beiden Schallwellen werden von der Koppeleinrichtung 1 ausgekoppelt und sind in der Fig. 1 mit AW2' und AW1' bezeichnet. Es wird dann zunächst die Phasendifferenz zwischen diesen beiden Schallwellen gemessen und aus dieser gemessenen Phasendifferenz $\Delta\phi$ gemäß der nachfolgenden Gleichung die Drehgeschwindigkeit $\Omega$ berechnet.

$$\Omega = \frac{v' \cdot \lambda'}{8 \pi F} \cdot \Delta\phi$$

mit

v'  : Schallgeschwindigkeit im Medium

$\lambda'$  : Wellenlänge der Schallwelle im Medium

F  : vom Schallwellenleiter umschlossene Fläche

$\Omega$  : Drehgeschwindigkeit

$\Delta\phi$  : gemessene Phasendifferenz

M.Böhm-39

Nachfolgend werden anhand der Figuren 2 und 3 zwei der zahlreichen möglichen Realisierungen beschrieben. In beiden Figuren sind die Ausbreitungswege für elektrische Signale mit dünnen Strichen und die Ausbreitungswege für Schallwellen mit dicken Strichen dargestellt.

Beim Ausführungsbeispiel nach Fig. 2 wird in einer Signalquelle 20 ein elektrisches Signal $A_0 \sin \omega t$ erzeugt. Dieses Signal wird zu einem ersten elektrisch/akustischen Wandler 21 und zu einem zweiten elektrisch/akustischen Wandler 22 geleitet. Diese beiden elektrisch/akustischen Wandler geben eine erste Schallwelle AW1 und eine zweite Schallwelle AW2 ab, die jeweils einen kreisförmigen Schallwellenleiter 23 bzw. 24 durchlaufen. Die beiden Schallwellenleiter sind so angeordnet, daß sie von den beiden Schallwellen mit entgegengesetztem Drehsinn durchlaufen werden. Nach dem Durchlaufen der beiden Schallwellenleiter 23 und 24 gelangen die Schallwellen jeweils zu einem akustisch/elektrischen Wandler 25 bzw. 26. Die elektrischen Ausgangssignale dieser beiden Wandler werden zu einer Phasenmeßeinrichtung 27 geleitet, in der die Phasendifferenz zwischen den beiden elektrischen Signalen gemessen werden. Diese Phasendifferenz ist der Drehgeschwindigkeit um die Achse, die auf der von den beiden kreisförmig angeordneten Schallwellenleitern umschlossenen Fläche senkrecht steht, proportional. Hierzu ist es notwendig, daß die beiden von den Schallwellenleitern 23 und 24 umschlossenen Flächen in einer Ebene liegen. Weiterhin ist es notwendig, daß die beiden Schallwellen gleichphasig in die Schallwellenleiter eingekoppelt werden. Dies ist dadurch gewährleistet, daß die elektrischen Signale für die beiden elektrisch/akustischen Wandler in einer einzigen Signalquelle erzeugt werden und über gleichlange elektrische

M.Böhm-39

Leitungen zu den elektrisch/akustischen Wandlern geleitet werden. Bei dem Ausführungsbeispiel nach der Fig. 3 ist im Gegensatz zu dem Ausführungsbeispiel nach Fig. 2 nur ein Schallwellenleiter 34, der einen geschlossenen Weg bildet, vorhanden. In diesem Fall ist es notwendig, die beiden Schallwellen, die den Schallwellenleiter gegensinnig durchlaufen, voneinander unterscheidbar zu machen. Dies ist dann möglich, wenn die beiden Schallwellen, die den Schallwellenleiter 34 gegensinnig durchlaufen, unterschiedliche Frequenzen aufweisen. In einer Signalquelle 30 wird wiederum ein elektrisches Signal $A_0 \sin\omega t$ erzeugt. Dieses Signal wird einerseits einem elektrisch/akustischen Wandler 33 zugeführt und andererseits zu einem Frequenzverdoppler 31 geleitet. Das Ausgangssignal des Frequenzverdopplers hat somit die doppelte Frequenz und ist durch $A_0 \sin 2\omega t$ beschreibbar. Dieses Signal wird einem weiteren elektrisch/akustischen Wandler 32 zugeführt. Die in den beiden elektrisch/akustischen Wandlern erzeugten Schallwellen AW1 und AW2, die voneinander unterschiedliche Schallfrequenzen haben, werden in den Schallwellenleitern 34 so eingekoppelt, daß sie diesen gegensinnig durchlaufen. Nach dem Durchlaufen gelangen die beiden Schallwellen zu akustisch/elektrischen Wandlern 35 und 36, die die Schallwellen weder in elektrische Signale umwandelt. Diese beiden elektrischen Signale werden Bandpässen 37 und 38 zugeführt, deren Durchlaßbereich jeweils auf eine der beiden Frequenzen, d. h. auf die Frequenz $\omega$ bzw. auf die Frequenz $2\omega$ abgestimmt sind. Das Ausgangssignal des Bandpasses, daß die Frequenz $\omega$ aufweist, wird einem Frequenzverdoppler 39 zugeführt, so daß auch das Signal in diesem Signalzweig die Frequenz $2\omega$ aufweist. Es stehen jetzt also, wie beim Ausführungsbeispiel nach Fig. 2, zwei gleichfrequente elektrische Signale zur Ver-

M.Böhm-39

fügung, nämlich $A_1 \sin(2\omega t + \phi_1)$ und $A_1 \sin(2\omega t + \phi_2)$. In einer Meßeinrichtung 29 wird wiederum die Phasendifferenz $\Delta\phi = \phi_2 - \phi_1$ zwischen den beiden elektrischen Signalen gemessen und aus dieser gemessenen Phasendifferenz $\Delta\phi$ wird die Drehgeschwindigkeit nach der oben angegebenen Formel berechnet. Die zur Auswertung notwendigen elektrischen Schaltungen sind an sich bekannt und werden deshalb hier nicht mehr erläutert. Zur Auswertung können die von den Faserkreiseln her bekannten Verfahren verwendet werden (zum Beispiel Modulation einer der beiden Schallwellen, Kompensation der durch die Drehung verursachten Phasendifferenz und Ermittlung der Drehgeschwindigkeit aus dem Regelsignal, das zur Kompensation notwendig ist, usw.). Es ist deshalb nicht notwendig, auf die möglichen Auswerteverfahren näher einzugehen.

Die zur Realisierung notwendigen akustischen Bauelemente sind an sich ebenfalls bekannt. Es wird hierzu auf das Buch Electronics Engineer's Handbook, 1982, Seite 13-72, verwiesen. Aus diesem Buch sind auch akustische Verstärker bekannt. Diese können bei der neuen Meßeinrichtung dann erforderlich sein, wenn entlang der Bahn, die durch den Schallwellenleiter bestimmt wird, eine große Dämpfung vorhanden ist.

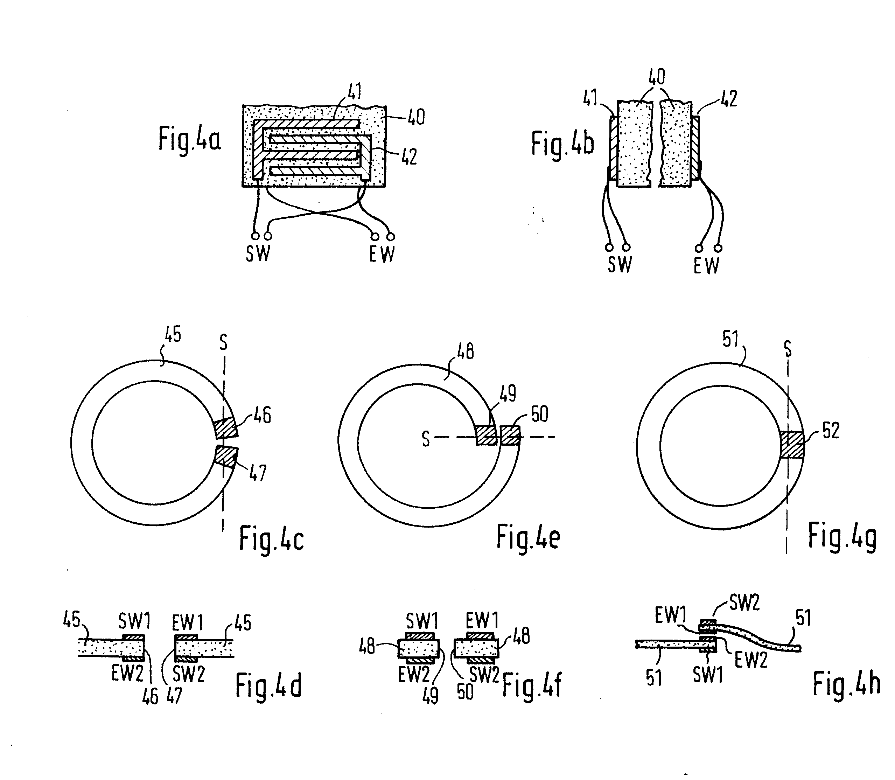

Anhand der Fig. 4 werden nachfolgend einige Möglichkeiten zur Realisierung des akustischen Schallwellenleiters bzw. der Anordnung der akustisch/elektrischen und der elektrisch/akustischen Wandler erläutert. Als Schallwellen werden vorzugsweise akustische Oberflächenwellen verwendet. Deshalb ist es möglich, die Schallwellenleiter in der von den Oberflächenwellenfiltern her bekannten Technologie zu

M.Böhm-39

realisieren. Bei akustischen Oberflächenwellen breitet sich die Schallwelle nur in einer Oberflächenschicht von ca. 1 Wellenlänge Tiefe aus. Es ist möglich die Breite des Leiters für die akustische Oberflächenwelle auf wenige Wellenlängen der akustischen Oberflächenwelle zu begrenzen, wodurch erreicht wird, daß sich nur noch ein Mode der akustischen Oberflächenwelle in dem Schallwellenleiter ausbreitet. Dies ist das Analogon zu dem optischen Monomodewellenleiter, der beim Faserkreisel vorzugsweise verwendet wird. Ein für den Schallwellenleiter geeignetes Material ist Lithiumniobat.

Der elektrisch/akustische Wandler erzeugt das Schallsignal und sendet dies in den Schallwellenleiter. Deshalb wird zur Vereinfachung ein elektrisch/akustischer Wandler nachfolgend als Sendewandler bezeichnet; ein akustisch/elektrischer Wandler sinngemäß als Empfangswandler.

Bei den in der Fig. 4 dargestellten Beispielen wird davon ausgegangen, daß zwei Schallwellenleiter vorgesehen sind. Diese sind an der Ober- bzw. Unterseite eines Substrats angeordnet. Wird der Schallwellenleiter auf der Oberseite des Substrats von der Schallwelle im Uhrzeigersinn durchlaufen, dann wird der Schallwellenleiter auf der Unterseite des Substrats von der Schallwelle entgegen dem Uhrzeigersinn durchlaufen. Bei der Fig. 4a ist auf der Oberseite des Substrats 40 ein Sendewandler angeordnet, der aus zwei kammförmigen und ineinander verzahnten elektrischen Leitern 41 und 42 besteht. Diesen beiden Leitern wird das elektrische Hochfrequenzsignal zugeführt. Da der Schallwellenleiter auf der Unterseite des Substrats von einer Schallwelle im

M.Böhm-39

entgegengesetzten Drehsinn durchlaufen wird, muß auf der Unterseite des Substrats der Empfangswandler EW für die Schallwelle, die sich in der Substratunterseite ausbreitet, vorhanden sein. In der Fig. 4b ist ein Teil des Substrats mit den auf ihm angeordneten Schallwellenleitern, der in der Fig. 4a in Draufsicht dargestellt ist, im Längsschnitt dargestellt. Die Bezugszeichen sind wie in der Fig. 4a gewählt. Bei dem Längsschnitt ist deutlich zu sehen, daß auf einander gegenüberliegenden Seiten des Substrats für die eine Welle der Sendewandler und für die andere Welle der Empfangswandler angeordnet ist.

In den Figuren 4c, 4e und 4g sind Draufsichten auf mehrere Schallwellenleiteranordnungen dargestellt. In den Figuren 4d, 4f und 4h sind jeweils Schnitte durch die in den Figuren 4c, 4e und 4g eingezeichneten Linien S zur besseren Verständlichkeit, wo die Wandler angeordnet sind, dargestellt.

Bei der Anordnung nach Fig. 4c bildet das Substrat 45 einen fast geschlossenen Kreisring mit den Enden 46 und 47. Auf der Oberseite bzw. Unterseite der Enden 46 und 47 des Substrats 45 sind jeweils Wandler angeordnet und zwar am Ende 46 auf der Oberseite der Sendewandler für die Welle im Uhrzeigersinn und an der Unterseite der Empfangswandler 2 für die Welle entgegen dem Uhrzeigersinn. Am Ende 47 ist auf der Oberseite des Substrats der Empfangswandler 1 für die Welle im Uhrzeigersinn und auf der Unterseite des Substrats der Sendewandler für die Welle entgegen dem Uhrzeigersinn angebracht. Bei der Anordnung nach Fig. 4e bildet das Substrat 48 ebenfalls fast einen Kreisring, jedoch ist hier der Kreisring aufgeschnitten und die Enden 49 und 50 des Kreises liegen in einer Ebene neben-

M.Böhm-39

einander. Wie in Fig. 4f gezeigt sind dort am einen Ende des Substrats auf der Ober- und Unterseite wieder Sendewandler für die eine und Empfangswandler für die andere Welle und am anderen Ende des Substrats auf der einen Seite Empfangswandler für die eine und Sendewandler für die andere Welle angeordnet. Bei der Anordnung nach Fig. 4g wird das Substrat 51 wiederum von einem Kreisring ausgegangen, wobei der Kreisring wieder auseinandergeschnitten ist und die Enden im Gegensatz zur Anordnung nach Fig. 4e hier übereinander angeordnet sind. In der Fig. 4h ist ein Schnitt entlang der Achse S dargestellt, aus dem zu entnehmen ist, daß auf der Oberseite des einen Substratendes der Sendewandler für die eine Welle und auf der Unterseite dieses Substratendes der Empfangswandler für die andere Welle angeordnet ist und daß auf der Oberseite des anderen Substratendes der Empfangswandler für die eine Welle und auf der Unterseite des anderen Substratendes der Sendewandler für die andere Welle angeordnet sind.

Zur Führung der Schallwellen können außer den beschriebenen Schallwellenleitern alle Schallwellenleitungsmechanismen angewandt werden. Besonders vorteilhaft ist ein Schallwellenleiter, bei dem von dem vom Stethoskop her bekannten Effekt Gebrauch gemacht wird. Dort besteht der Wellenleiter aus zwei unterschiedlichen und zueinander konzentrisch angeordneten Materialien, die so gewählt sind, daß die Schallwelle in den beiden Materialien unterschiedliche Ausbreitungsgeschwindigkeiten aufweist.

Ù133221

M.Böhm-39

Patentansprüche

1. Einrichtung zur Messung der Drehgeschwindigkeit, d a d u r c h  g e k e n n z e i c h n e t, daß ein eine bestimmte Fläche umschließender Schallwellenleiter (34) vorgesehen ist, daß dieser von zwei Schallwellen (AW1, AW2) mit entgegengesetztem Richtungssinn durchlaufen wird, und daß aus der drehgeschwindigkeitsabhängigen Phasendifferenz (29) zwischen den beiden Schallwellen nach dem Durchlaufen des Schallwellenleiters die Drehgeschwindigkeit ermittelt wird.

2. Einrichtung nach Anspruch 1, dadurch gekennzeichnet, daß die beiden Schallwellen unterschiedliche Frequenzen ($\omega$, $2\omega$) haben.

3. Einrichtung zur Messung der Drehgeschwindigkeit, dadurch gekennzeichnet, daß zwei eine bestimmte Fläche umschließende Schallwellenleiter (23, 24) vorgesehen sind, daß diese von jeweils einer Schallwelle (AW1, AW2) durchlaufen werden und zwar mit entgegengesetztem Richtungssinn, und daß aus der drehgeschwindigkeitsabhängigen Phasendifferenz (27) zwischen den beiden Schallwellen nach dem Durchlaufen der beiden Schallwellenleiter die Rotationsgeschwindigkeit ermittelt wird.

ZT/P1-Sm/R
04.07.1983

-2-

M.Böhm-39

4. Einrichtung nach Anspruch 3, dadurch gekennzeichnet, daß die beiden Schallwellenleiter nebeneinander angeordnet sind.

5. Einrichtung nach Anspruch 3, dadurch gekennzeichnet, daß die beiden Schallwellenleiter übereinander angeordnet sind.

6. Einrichtung nach Anspruch 5, dadurch gekennzeichnet, daß die beiden Schallwellenleiter auf der Ober- bzw. Unterseite eines Substrates angeordnet sind.

7. Einrichtung nach einem der Ansprüche 1 bis 6, dadurch gekennzeichnet, daß die Schallwellen akustische Oberflächenwellen sind.

8. Einrichtung nach Anspruch 7, dadurch gekennzeichnet, daß die Breite des/der Schallwellenleiter(s) so gewählt ist/sind, daß sich in ihm/ihnen nur ein Mode ausbreiten kann/können.

9. Einrichtung nach einem der Ansprüche 1 bis 6, dadurch gekennzeichnet, daß die Schallwellenleiter einen zumindest angenähert kreisförmigen oder rechteckförmigen Verlauf haben.

Fig.1

Fig.2

$A_0 \sin \omega t$

$A_0 \sin \omega t$

Auswerte-einrichtung

$A_0 \sin 2\omega t$

$A_0 \sin \omega t$

$A_1 \sin(2\omega t + \emptyset_1)$

$A_1 \sin(2\omega t + \emptyset_2)$

Auswerte-einrichtung

Fig.3

M. Böhm 39
18.7.83

Fig.4a

Fig.4b

Fig.4c

Fig.4e

Fig.4g

Fig.4d

Fig.4f

Fig.4h

0133221

M. Böhm 39
18.7.83

**Europäisches Patentamt**

**EUROPÄISCHER RECHERCHENBERICHT**

0 133221

Nummer der Anmeldung

EP 84 10 7979

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | US-A-4 384 409  (LAO) <br> * Spalte 1, Zeilen 38-59; Figur 10 * <br><br> --- | 1,7,9 | G 01 P 3/44 |
| A | US-A-3 910 373  (NEWBURGH et al.) <br> * Spalte 1, Zeilen 4-53; Figuren 1-6 * <br><br> --- | 1,7,9 | |
| A | US-A-3 861 220  (FELSENTHAL) <br> * Spalte 1, Zeile 53 - Spalte 2, Zeile 9; Figuren 1-3,5 * <br><br> --- | 1-3 | |
| A,D | DE-A-3 136 688  (SEL) <br> * Seite 12, Zeile 27 - Seite 13, Zeile 15; Figur 1 * <br><br> ----- | 1,2,9 | |
| | | | **RECHERCHIERTE SACHGEBIETE (Int. Cl.4)** <br><br> G 01 P <br> G 01 C |

Der vorliegende Recherchenbericht wurde für alle Patentansprüche erstellt.

| Recherchenort <br> DEN HAAG | Abschlußdatum der Recherche <br> 29-10-1984 | Prüfer <br> HANSEN P. |
|---|---|---|